# EUROPEAN PATENT APPLICATION

(11) **EP 3 828 955 A1**
(43) Date of publication of application: **02.06.2021**
(21) Application number: 19842095.2
(22) Date of filing: 22.07.2019
(51) Int. Cl.: H01M 2/10, H01M 10/613, H01M 10/643, H01M 10/653, H01M 10/6554

(54) **BATTERY UNIT**

(30) Priority: 24.07.2018 JP 2018138652
(71) Applicant: FDK Corporation, Tokyo 108-8212 (JP)
(72) Inventor: YUMOTO Mitsuru, Tokyo 108-8212 (JP)
(74) Representative: Epping - Hermann - Fischer
(86) International application number: PCT/JP2019/028675
(87) International publication number: WO 2020/022273

(57) **Abstract**

A battery unit 2 comprises a battery pack 4, and a storage case 8 storing the battery pack 4, the storage case 8 includes a bottom wall 14 on which the battery pack 4 is mounted, the battery pack 4 includes a bottom plate 36 located between a battery assembly 34 and the bottom wall 14 when the battery pack is stored in the storage case 8, the bottom plate 36 abutting on the bottom wall 14, the bottom plate 36 includes a fitting protrusion 52 protruding in a direction away from the battery assembly 34, and the bottom wall 14 includes a bottom wall side fixing groove 16 in which the fitting protrusion 52 is fitted, in a position corresponding to the fitting protrusion 52.

## Description

### Technical Field

The present invention relates to a battery unit.

### Background Art

A battery unit is a power source device including at least one battery pack formed by combining a large number of chargeable secondary batteries, and is used for various use applications such as a power source for driving an electric car, a power storage system for renewable energy, and a backup power source as a power outage measure.

In this battery unit, the battery pack is usually stored in a storage case as described in Patent Document 1.

Furthermore, when the battery unit is moved to be installed at a predetermined location, the battery unit might be subjected to vibration or impact. When equipment including the battery unit installed therein moves itself, the battery unit might also be subjected to vibration or impact. If the battery unit is subjected to the vibration or impact in this manner, the battery pack might move in the case. There is concern that, for example, due to collision of the battery pack with another battery pack or collision of the battery pack with parts around the battery pack, a battery itself or parts around the battery may be damaged. To prevent such damage from being caused, it is necessary to fix the battery pack in the storage case.

It is a common method of fixing the battery pack to press the battery pack by use of a fixing member. For example, in an instance of fixing the battery pack in the storage case comprising a rectangular parallelepiped box, in a state where the battery pack is mounted on a bottom wall of the storage case, a rear end of the battery pack is pressed onto a rear wall located on an inner side of the storage case. Then, a front end of the battery pack is allowed to abut on the fixing member prepared in advance, and still in this state, the fixing member is fixed to a predetermined position on the bottom wall of the storage case. Consequently, the battery pack is sandwiched between the rear wall of the storage case and the fixing member fixed onto the bottom wall of the storage case. That is, the battery pack is pressed and fixed with the fixing member.

### Prior Art Document

### Patent Document

Patent Document 1: Japanese Patent Laid-Open No. 2000-280759

### Summary of the Invention

### Problems to be solved by the Invention

As described above, in an instance where a battery pack is sandwiched between a fixing member and a rear wall of a storage case, a pressing force acts on the battery pack, and movement of the battery pack is prevented in a direction (a forward-rearward direction) extending from a front end to a rear end of the battery pack. However, the above described pressing force of the fixing member does not act in a direction perpendicular to the forward-rearward direction of the battery pack and a direction (a lateral direction) along a bottom wall. Consequently, there is concern that, in an instance where there is space between a side part of the battery pack and a side wall of the storage case or in an instance where there is space between respective side parts of two of a plurality of battery packs, the battery pack moves in the lateral direction. To suppress such movement in the lateral direction, a fixing member for the lateral direction needs to be added to a side of the battery pack.

A conventional battery unit requires the fixing member as described above, and cost for this fixing member is required. Consequently, manufacturing cost comparatively increases.

Furthermore, the fixing member for the forward-rearward direction and the fixing member for the lateral direction described above are usually screwed to the bottom wall of the storage case. That is, in the conventional battery unit, manufacturing requires a step of screwing the fixing member, and hence manufacturing efficiency comparatively decreases.

An object of the present invention, which has been made based on the above described situations, is to provide a battery unit capable of inhibiting a battery pack from being moved in a forward-rearward direction and a lateral direction, and decreasing the number of parts and assembly man-hours.

### Means for Solving the Problems

In order to achieve the above object, according to an aspect of the present invention, provided is a battery unit comprising a battery pack including a battery assembly formed by assembling a plurality of batteries, and a storage case storing the battery pack, wherein the storage case includes a bottom wall on which the battery pack is mounted, the battery pack includes a bottom plate located between the battery assembly and the bottom wall when the battery pack is stored in the storage case, the bottom plate abutting on the bottom wall, the bottom plate includes a bottom plate fitting protrusion protruding in a direction away from the battery assembly, and the bottom wall includes a bottom wall side fixing groove in which the bottom plate fitting protrusion is fitted, in a position corresponding to the bottom plate fitting protrusion.

### Advantageous Effects of the Invention

According to the present invention, a bottom plate fitting protrusion provided on a bottom plate included in a battery pack is fitted in a bottom wall side fixing groove provided in a bottom wall of a storage case, and hence the battery pack, prevented from being moved in a forward-rearward direction and a right-left direction (a lateral direction), is fixed to an interior of the storage case. Furthermore, in manufacturing a battery unit, for example, an operation of separately preparing a fixing member and screwing the fixing member can be omitted. Consequently, according to the present invention, the number of parts of the battery unit and assembly man-hours can be decreased.

### Brief Description of the Drawings

FIG. 1 is an exploded perspective view showing a battery unit according to a first embodiment of the present invention.
FIG. 2 is a perspective view showing a battery assembly.
FIG. 3 is an exploded perspective view showing a battery pack according to the first embodiment of the present invention.
FIG. 4 is a perspective view showing the battery pack according to the first embodiment of the present invention.
FIG. 5 is an exploded perspective view showing a battery pack according to a second embodiment of the present invention.
FIG. 6 is an exploded perspective view showing a battery unit according to the second embodiment of the present invention.
FIG. 7 is a perspective view showing a composite insulation plate according to a third embodiment of the present invention.
FIG. 8 is a perspective view showing a battery pack according to the third embodiment of the present invention.
FIG. 9 is an exploded perspective view schematically showing a battery pack, a heat dissipation plate and a bottom wall of a case body according to a fourth embodiment of the present invention.
FIG. 10 is a side view schematically showing a part of a battery unit according to the fourth embodiment of the present invention.

### Mode for Carrying out the Invention

### [First Embodiment]

Hereinafter, description will be made as to a battery unit 2 according to a first embodiment of the present invention with reference to the drawings.

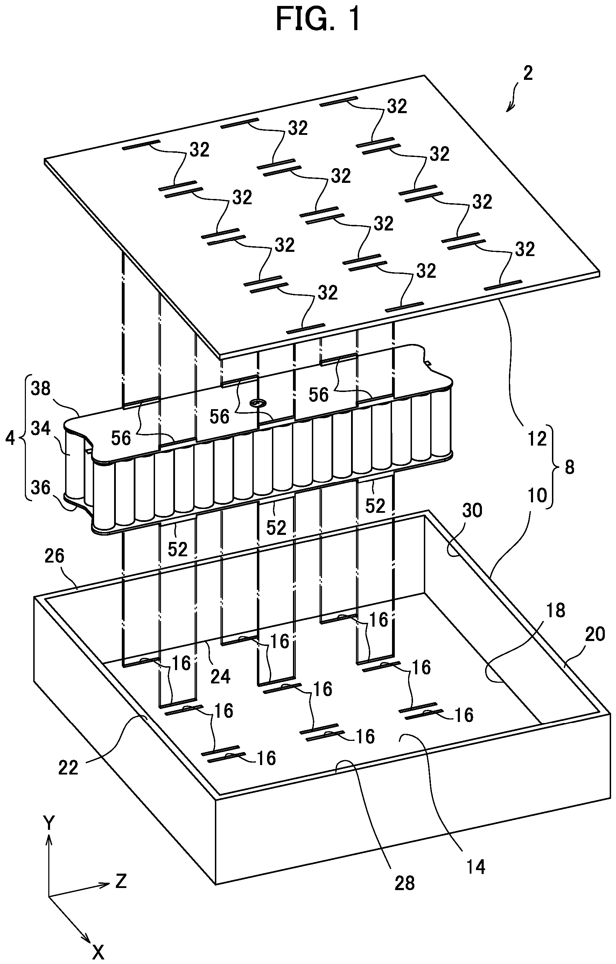

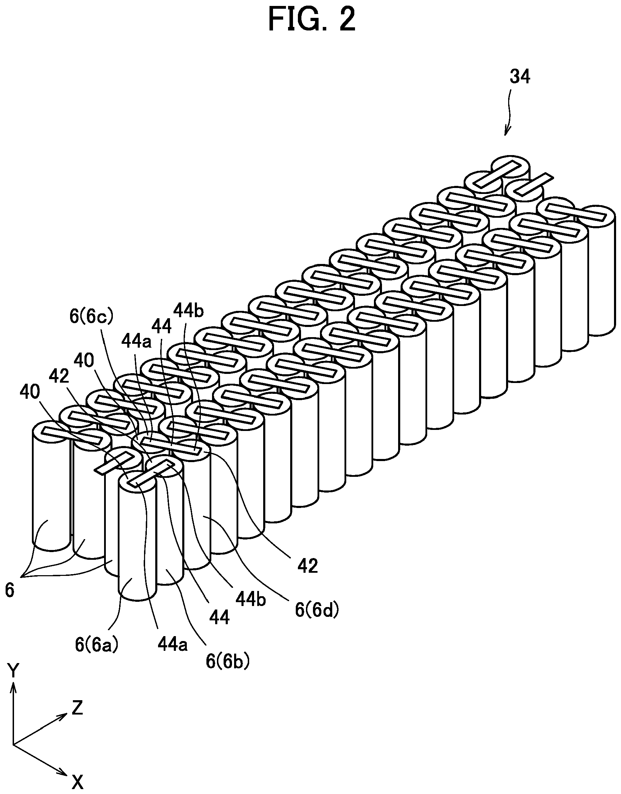

As shown in FIG. 1, the battery unit 2 comprises a battery pack 4 including a plurality of batteries 6, and a storage case 8 storing the battery pack 4. Here, in FIG. 1, a tip side of an arrow X is a right side, a base side thereof is a left side, a tip side of an arrow Y is an upper side, a base side thereof is a lower side, a tip side of an arrow Z is a rear side, and a base side thereof is a front side. This also applies to the other drawings of FIG. 2 to FIG. 9.

The storage case 8 includes a case body 10, and a lid plate 12 that closes the case body 10.

The case body 10 includes a bottom wall 14 on which the battery pack 4 is mounted. The bottom wall 14 has a rectangular shape, and is provided with a bottom wall side fixing groove 16 for use in fixing the battery pack at a predetermined position. The bottom wall side fixing groove 16 has an elongated rectangular shape in planar view.

At a rear edge 18 of the bottom wall 14, an upwardly extending rear wall 20 is formed. At a front edge of the bottom wall 14, an upwardly extending front wall 22 is formed. At a left edge 24 of the bottom wall 14, an upwardly extending left wall 26 is formed. At a right edge of the bottom wall 14, an upwardly extending right wall 28 is formed. The rear wall 20, front wall 22, left wall 26 and right wall 28 have a predetermined height of the same dimension. A part surrounded with upper edges of the rear wall 20, front wall 22, left wall 26 and right wall 28 is opened. That is, the case body 10 forms a box shape having an upper end opening 30 in its upper end.

The lid plate 12 is formed of a rectangular plate material that matches the upper end opening 30 of the case body 10, and closes the upper end opening 30 of the case body 10. Then, the lid plate 12 in a state of closing the upper end opening 30 is fixed to the case body 10 with a fastener. Furthermore, a lid plate side fixing groove 32 for use to fix the battery pack 4 is provided in a predetermined portion of the lid plate 12.

The battery pack 4 includes a battery assembly 34 formed by assembling the plurality of batteries 6, a bottom plate 36 disposed on a lower part of the battery assembly 34, and a top plate 38 disposed on an upper part of the battery assembly 34.

There are not any special restrictions on the batteries 6 described above, but, for example, cylindrical nickel hydrogen secondary batteries are used. The battery assembly 34 of the batteries 6 is manufactured, for example, as follows.

The plurality of batteries 6 are prepared in advance, and a required number of batteries among the plurality of batteries 6 are aligned. There are not any special restrictions on an aligning method, but, for example, as shown in FIG. 2, batteries 6 in a state of being raised upright are linearly arranged in four rows so that peripheral walls come in contact with one another. At this time, the batteries 6 adjacent to each other are arranged so that positive electrode terminals 40 and negative electrode terminals 42 are reversed. Then, the adjacent batteries 6 are electrically connected to each other. Specifically, for example, if a first battery 6a is disposed in a state where the positive electrode terminal 40 is on the upper side and the negative electrode terminal 42 is on the lower side, an adjacent second battery 6b is disposed in a state where the negative electrode terminal 42 is on the upper side and the positive electrode terminal 40 is on the lower side. In this state, a terminal plate 44 comprising a metal plate material is bridged across the positive electrode terminal 40 of the first battery 6a and the negative electrode terminal 42 of the second battery 6b. Then, one end 44a of the terminal plate 44 is resistance welded to the positive electrode terminal 40 of the first battery 6a, and the other end 44b of the terminal plate 44 is resistance welded to the negative electrode terminal 42 of the second battery 6b. Consequently, the first battery 6a and the second battery 6b are electrically connected in series.

Subsequently, a third battery 6c adjacent to the second battery 6b is disposed in a state where the positive electrode terminal 40 is on the upper side and the negative electrode terminal 42 is on the lower side, and hence the terminal plate 44 comprising the metal plate material is bridged across the positive electrode terminal 40 of the second battery 6b and the negative electrode terminal 42 of the third battery 6c. Then, one end 44a of the terminal plate 44 is resistance welded to the positive electrode terminal 40 of the second battery 6b, and the other end 44b of the terminal plate 44 is resistance welded to the negative electrode terminal 42 of the third battery 6c. Consequently, the second battery 6b and the third battery 6c are electrically connected in series.

Furthermore, a fourth battery 6d adjacent to the third battery 6c is disposed in a state where the negative electrode terminal 42 is on the upper side and the positive electrode terminal 40 is on the lower side, and hence the terminal plate 44 comprising the metal plate material is bridged across the positive electrode terminal 40 of the third battery 6c and the negative electrode terminal 42 of the fourth battery 6d. Then, one end 44a of the terminal plate 44 is resistance welded to the positive electrode terminal 40 of the third battery 6c, and the other end 44b of the terminal plate 44 is resistance welded to the negative electrode terminal 42 of the fourth battery 6d. Consequently, the third battery 6c and the fourth battery 6d are electrically connected in series.

As described above, predetermined batteries adjacent to each other are electrically connected, to form the battery assembly 34. The obtained battery assembly 34 has such a longitudinal shape as shown in FIG. 2.

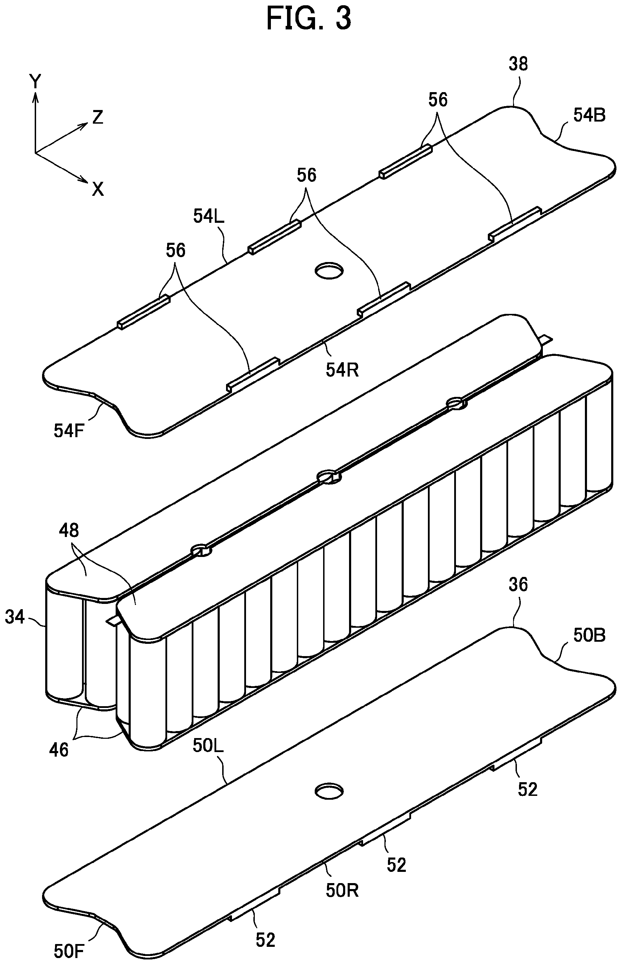

Next, as shown in FIG. 3, a double-sided tape 46 that bonds to the after-mentioned bottom plate 36 is affixed to a lower end surface of the battery assembly 34, and a double-sided tape 48 that bonds to the after-mentioned top plate 38 is affixed to an upper end face of the battery assembly 34.

The bottom plate 36 is disposed on the lower part of the battery assembly 34. The bottom plate 36 has about the same rectangular shape as a shape of the lower part of the battery assembly 34 in planar view. Specifically, as is clear from FIG. 3, each of left and right long side portions 50L, 50R has a straight shape extending in a forward-rearward direction of the battery assembly 34. A front short side portion 50F includes corners each comprising a round corner, and a center having a recessed shape, to match a shape of four batteries 6 located on the front side in planar view. A rear short side portion 50B includes corners each comprising a round corner, and a center having a recessed shape, to match a shape of four batteries 6 located on the rear side in planar view.

The left and right long side portions 50L, 50R are provided with fitting protrusions 52 each protruding in a direction away from the battery assembly 34. In the present embodiment, three fitting protrusions 52 having a predetermined length are provided at almost equal intervals in the forward-rearward direction on each of the left and right long side portions 50L, 50R. Each of the fitting protrusions 52 has an elongated rectangular shape in planar view, and forms a shape that matches the bottom wall side fixing groove 16 of the bottom wall 14 described above.

It is preferable that the bottom plate 36 is formed of an insulating material having electric insulating properties, and is connected to the lower part of the battery assembly 34 via the double-sided tape 46 described above. In the lower part of the battery assembly 34, the terminal plate 44 and the positive electrode terminal 40 and negative electrode terminal 42 of each battery 6 are exposed, and hence the bottom plate 36 is connected so that the insulating properties are achieved.

On the other hand, the top plate 38 is disposed on the upper part of the battery assembly 34. The top plate 38 is formed of the same material and has the same shape as in the bottom plate 36 described above. Specifically, as is clear from FIG. 3, each of left and right long side portions 54L, 54R has a straight shape extending in the forward-rearward direction of the battery assembly 34. A front short side portion 54F includes corners each comprising a round corner, and a center having a recessed shape, to match the shape of four batteries 6 located on the front side in planar view. A rear short side portion 54B includes corners each comprising a round corner, and a center having a recessed shape, to match the shape of four batteries 6 located on the rear side in planar view.

The left and right long side portions 54L, 54R are provided with fitting protrusions 56 each protruding in the direction away from the battery assembly 34. In the present embodiment, three fitting protrusions 56 having a predetermined length are provided at almost equal intervals in the forward-rearward direction on each of the left and right long side portions 54L, 54R. Each of the fitting protrusions 56 has an elongated rectangular shape in planar view, and forms a shape that matches the lid plate side fixing groove 32 of the lid plate 12 described above.

Then, the top plate 38 in a direction opposite to the bottom plate 36 is connected to the upper part of the battery assembly 34 via the double-sided tape 48 described above. In the upper part of the battery assembly 34, the terminal plate 44 and the positive electrode terminal 40 and negative electrode terminal 42 of each battery 6 are exposed, and hence the top plate 38 is connected so that the insulating properties are achieved.

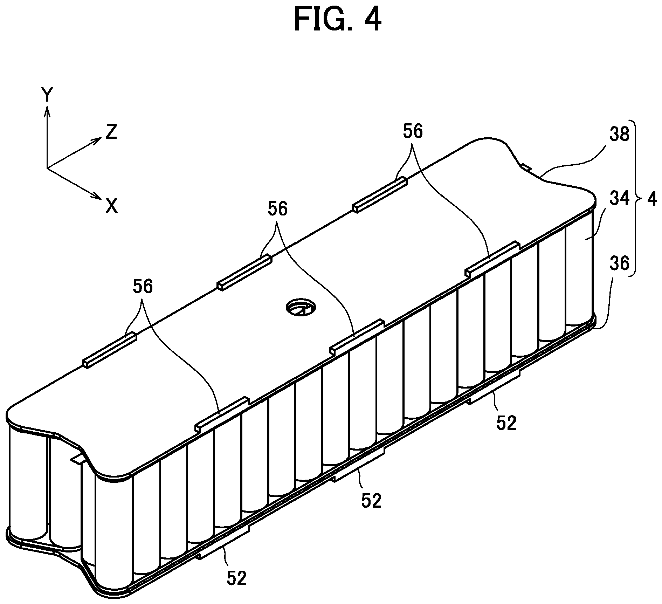

As described above, the bottom plate 36 is disposed on the lower part of the battery assembly 34, and the top plate 38 is disposed on the upper part of the battery assembly 34, so that such battery pack 4 as shown in FIG. 4 is obtained. In the obtained battery pack 4, the fitting protrusions 52 provided on both sides of the bottom plate 36 project downward, which is the opposite side of the battery assembly 34, and the fitting protrusions 56 provided on both sides of the top plate 38 project upward, which is the opposite side of the battery assembly 34.

Next, as shown in FIG. 1, the obtained battery pack 4 is stored in the storage case 8. Specifically, the battery pack 4 is mounted at the predetermined position on the bottom wall 14. In the bottom wall 14, the bottom wall side fixing groove 16 is provided as described above. Specifically, the bottom wall side fixing groove 16 is provided in a position corresponding to each of the fitting protrusions 52 of the bottom plate 36 of the battery pack 4, in an instance where the battery pack 4 is mounted at the predetermined position. Consequently, the battery pack 4 mounted on the bottom wall 14 of the storage case 8 includes the fitting protrusion 52 of the bottom plate 36 inserted in the bottom wall side fixing groove 16. Thus, the fitting protrusion 52 of the bottom plate 36 of the battery pack 4 fits in the bottom wall side fixing groove 16, so that the battery pack 4 is fixed. Therefore, the battery pack 4 is inhibited from being moved not only in the forward-rearward direction but also in a right-left direction (a lateral direction). Furthermore, according to the present embodiment, the battery pack can be fixed only by inserting the fitting protrusion 52 of the bottom plate 36 in the bottom wall side fixing groove 16, and hence unlike a conventional technique, an operation of separately preparing a fixing member, pressing a battery pack onto a rear wall with the fixing member and screwing the fixing member is not required. Therefore, cost reduction of parts and improvement of manufacturing efficiency can be achieved.

Furthermore, in the lid plate 12 of the storage case 8, the lid plate side fixing groove 32 is provided as described above. Specifically, the lid plate side fixing groove 32 is provided in a position corresponding to each of the fitting protrusions 56 of the top plate 38 of the battery pack 4, in an instance where the battery pack 4 is stored in the case body 10 and covered with the lid plate 12 to close the upper end opening 30. Here, a height dimension of the rear wall 20, front wall 22, left wall 26 and right wall 28 is a predetermined height dimension with which the lid plate side fixing groove 32 can fit with the fitting protrusion 56 of the top plate 38 of the battery pack 4, in an instance where the case body 10 is covered with the lid plate 12. Consequently, when the case body 10 is covered with the lid plate 12 to close the upper end opening 30, the fitting protrusion 56 of the top plate 38 of the battery pack 4 is inserted in the lid plate side fixing groove 32. Thus, the fitting protrusion 56 of the top plate 38 fits in the lid plate side fixing groove 32, and hence the battery pack 4 is fixed also on a top plate 38 side, so that the battery pack 4 can be fixed more stably. Here, the lid plate 12 is fixed to the case body 10 with an unshown fastener. In consequence, the battery unit 2 according to the present invention can be obtained.

Here, FIG. 1 only shows one battery pack 4, but in the battery unit 2 of the present invention, the number of the battery packs 4 to be stored is not limited to one. To obtain required output, a plurality of battery packs 4 can be stored. Consequently, a plurality of bottom wall side fixing grooves 16 are formed in predetermined positions in the bottom wall 14 of the storage case 8, and a plurality of lid plate side fixing grooves 32 are formed in predetermined positions of the lid plate 12 of the storage case 8. Furthermore, in each battery pack 4, although not shown, a cable capable of inputting and outputting current for charging and discharging is disposed. Additionally, in the battery unit 2, although not shown, various parts required for a power source device are mounted.

### [Second Embodiment]

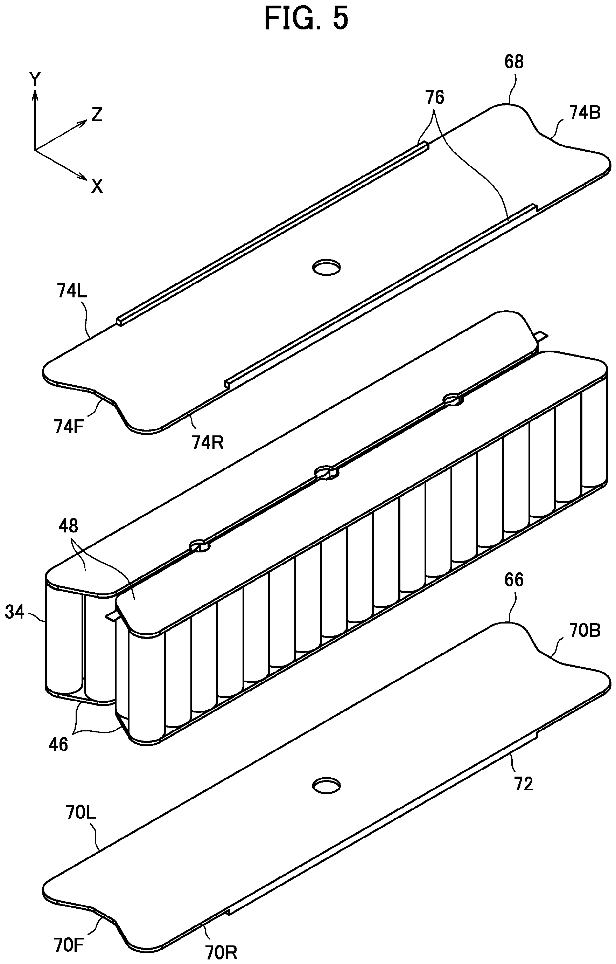

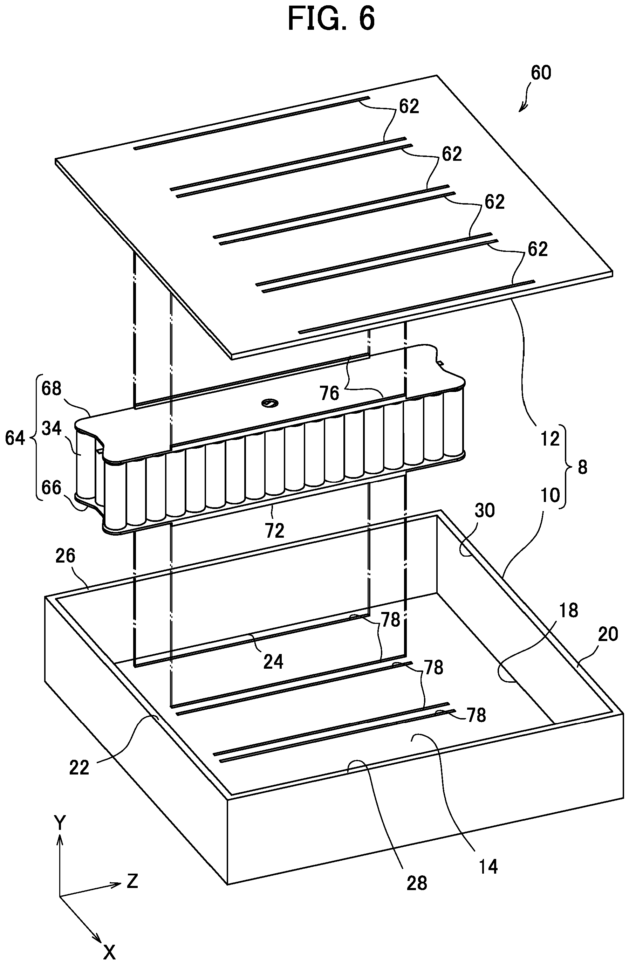

Description will be made as to a battery unit 60 according to a second embodiment with reference to FIGS. 5, 6. Note that in describing the battery unit 60 according to the second embodiment, the same configuration as in the battery unit 2 according to the first embodiment described above is denoted with the same reference signs as in the battery unit 2 according to the first embodiment to omit detailed description thereof, and a part different from the battery unit 2 according to the first embodiment will be described in detail (similarly in the other embodiments described later, the same configuration as in the already described embodiment is denoted with the same reference signs to omit detailed description thereof).

In the battery unit 60, a bottom plate 66 of a battery pack 64 is similar to the bottom plate 36 of the battery pack 4 according to the first embodiment, except that a fitting protrusion 72 provided on a left edge 70L is not divided into three protrusions, and is one protrusion and that a fitting protrusion 72 provided on a right edge 70R is not divided into three protrusions, and is also one protrusion. The left and right fitting protrusions 72 have a comparatively large length, and have a length of about 65% of an overall length of the left edge 70L and a length of about 65% of an overall length of the right edge 70R, respectively. Note that a length of the fitting protrusion 72 may be any length.

Furthermore, in the battery unit 60, a top plate 68 of the battery pack 64 is similar to the top plate 38 of the battery pack 4 according to the first embodiment, except that a fitting protrusion 76 provided on a left edge 74L is not divided into three protrusions, and is one protrusion and that a fitting protrusion 76 provided on a right edge 74R is not divided into three protrusions, and is also one protrusion. The left and right fitting protrusions 76 have a comparatively large length, and have a length of about 65% of an overall length of the left edge 74L and a length of about 65% of an overall length of the right edge 74R. Note that a length of the fitting protrusion 76 may be any length.

To receive the fitting protrusion 72 described above, a bottom wall side fixing groove 78 provided in a bottom wall 14 of a case body 10 is formed as a groove having the same length and width as in the fitting protrusion 72 in a position corresponding to the fitting protrusion 72 of the bottom plate 66. Furthermore, to receive the fitting protrusion 76 described above, a lid plate side fixing groove 62 provided in a lid plate 12 is formed as a groove having the same length and width as in the fitting protrusion 76 in a position corresponding to the fitting protrusion 76 of the top plate 68.

Thus, the fitting protrusions 72, 76 are formed to be comparatively long, so that the bottom plate 66 and the top plate 68 are hard to deform, to increase shape stability of the battery pack 64.

### [Third Embodiment]

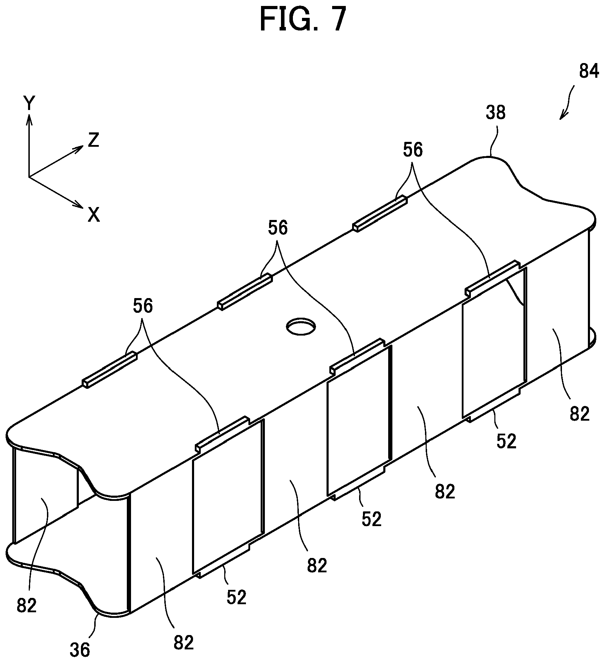

In a battery pack 80 for use in a battery unit of a third embodiment, as shown in FIG. 7, a composite insulation plate 84 is used in which a bottom plate 36 and a top plate 38 are coupled via a coupling member 82 bridged across side edges of the plates.

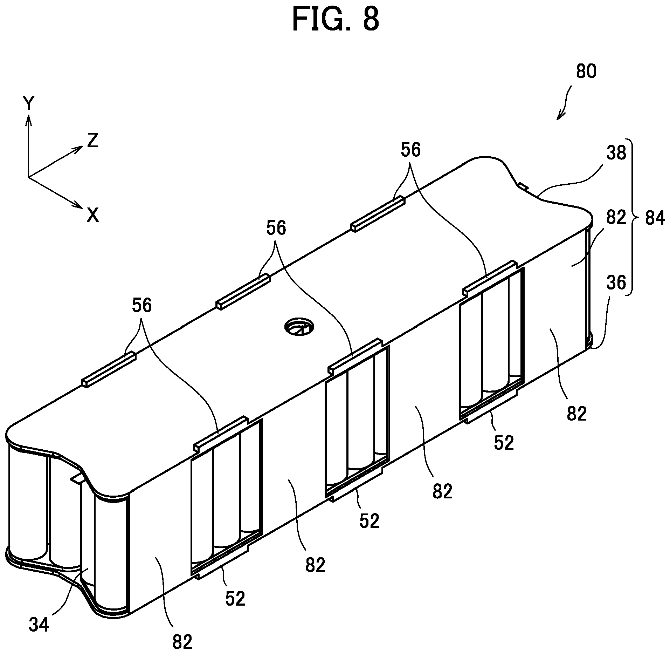

According to the composite insulation plate 84 assembled with a battery assembly 34 as shown in FIG. 8, the bottom plate 36 or the top plate 38 is inhibited from being disassembled from the battery assembly 34, and the battery pack 80 is integrated, which facilitates handling only of the battery pack 80. This can simplify an operation of storing the battery pack 80 in a storage case 8, and improve manufacturing efficiency.

### [Fourth Embodiment]

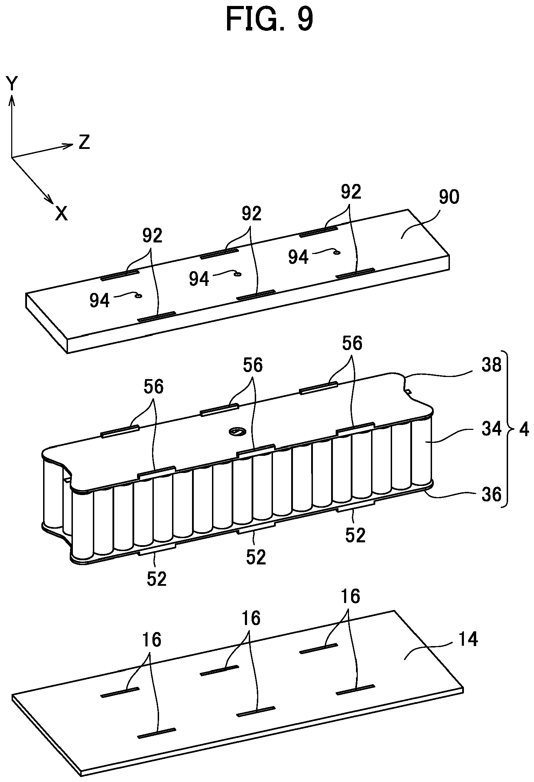

In a battery unit of a fourth embodiment, as shown in FIG. 9, a heat dissipation plate 90 is disposed on a top plate 38 of a battery pack 4. Note that for a storage case 8, FIG. 9 only shows a part of a bottom wall 14.

The heat dissipation plate 90 is a rectangular plate material that can cover the top plate 38, and is formed of a material having a high thermal conductivity. Specifically, it is preferable to use a material indicating a thermal conductivity from about 200 W/mK to 400 W/mK, such as aluminum or copper.

In the heat dissipation plate 90, a heat dissipation plate side fixing groove 92 is provided in a position corresponding to a fitting protrusion 56 of the top plate 38 when the plate is disposed on the top plate 38. The fitting protrusion 56 of the top plate 38 is inserted in the heat dissipation plate side fixing groove 92. Consequently, the heat dissipation plate 90 and the top plate 38 of the battery pack 4 are fitted.

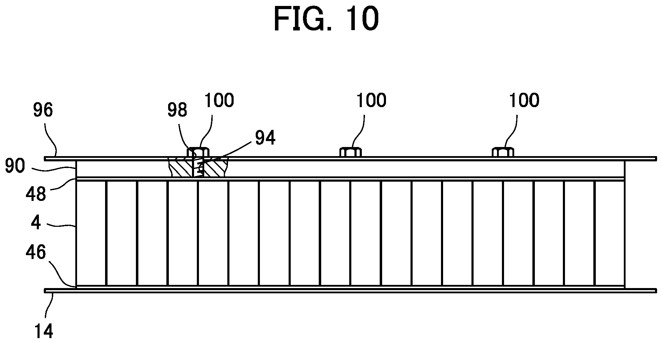

Furthermore, as shown in FIG. 9, an internally threaded screw hole 94 is provided in a predetermined position of the heat dissipation plate 90. A case body 10 storing the battery pack 4 in a state where the heat dissipation plate 90 is disposed on the top plate 38 is covered with a lid plate 96 to close an upper end opening 30 of the case body 10. In the lid plate 96 according to the present embodiment, as shown in FIG. 10, a screw through hole 98 is provided in a position corresponding to the internally threaded screw hole 94 of the heat dissipation plate 90. Consequently, in a state where the case body 10 is covered with the lid plate 96, an external thread 100 is screwed in the internally threaded screw hole 94 of the heat dissipation plate 90 via the screw through hole 98, and then the heat dissipation plate 90 is connected to the lid plate 96. As described above, since the fitting protrusion 56 of the top plate 38 is fitted in the heat dissipation plate side fixing groove 92 of the heat dissipation plate 90, the battery pack 4 is fixed to the lid plate 96 via the heat dissipation plate 90.

Here, a height dimension of a rear wall 20, front wall 22, left wall 26 and right wall 28 of the case body 10 is a predetermined height dimension with which an upper surface of the heat dissipation plate 90 mounted on the battery pack 4 can abut on a lower surface of the lid plate 96, when the case body 10 is covered with the lid plate 96. Furthermore, in the lid plate 96, the screw through hole 98 may be provided in a predetermined position, and a lid plate side fixing groove 32 can be omitted.

According to the present embodiment, in an instance where the battery pack 4 heats, heat can be dissipated via the heat dissipation plate 90, and the pack can be prevented from being deteriorated due to heat of a battery 6.

As described above, in the battery unit of the present invention, the fitting of the fitting protrusion in the bottom wall side fixing groove can inhibit the battery pack from being moved not only in the forward-rearward direction but also in the right-left direction (the lateral direction), and the battery pack can be reliably fixed. Additionally, without separately preparing any fixing members, the battery pack can be fixed as described above. Consequently, manufacturing of the battery unit can be facilitated, and the number of parts required in manufacturing the battery unit can be decreased. Therefore, according to the present invention, improvement of the manufacturing efficiency of the battery unit and reduction of manufacturing cost can be achieved.

Note that the present invention is not limited to the above described embodiment, and can be variously modified. For example, the shape of each of the fitting protrusion, bottom wall side fixing groove and lid plate side fixing groove in planar view is not limited to the rectangular shape, and the shape may be any shape in planar view, such as a square, a polygonal shape or a round shape as long as the fitting protrusions match the bottom wall side fixing groove and the lid plate side fixing groove, respectively.

### <Aspects of Present Invention>

A first aspect of the present invention is a battery unit comprising a battery pack including a battery assembly formed by assembling a plurality of batteries, and a storage case storing the battery pack, wherein the storage case includes a bottom wall on which the battery pack is mounted, the battery pack includes a bottom plate located between the battery assembly and the bottom wall when the battery pack is stored in the storage case, the bottom plate abutting on the bottom wall, the bottom plate includes a bottom plate fitting protrusion protruding in a direction away from the battery assembly, and the bottom wall includes a bottom wall side fixing groove in which the bottom plate fitting protrusion is fitted, in a position corresponding to the bottom plate fitting protrusion.

According to a second aspect of the present invention, in the battery unit of the above first aspect of the present invention, the storage case includes a lid plate located at a position facing the bottom wall, the battery pack includes a top plate covering an upper part of the battery assembly on a side opposite to the bottom plate via the battery assembly, the top plate includes a top plate fitting protrusion protruding in a direction away from the battery assembly, and the lid plate includes a lid plate side fixing groove in which the top plate fitting protrusion is fitted, in a position corresponding to the top plate fitting protrusion.

According to a third aspect of the present invention, in the battery unit of the above first aspect of the present invention, the storage case includes a lid plate located at a position facing the bottom wall, the battery pack includes a top plate covering an upper part of the battery assembly on a side opposite to the bottom plate via the battery assembly, the top plate includes a top plate fitting protrusion protruding in a direction away from the battery assembly, a heat dissipation plate is disposed between the top plate and the lid plate, the heat dissipation plate includes a heat dissipation plate side fixing groove in which the top plate fitting protrusion is fitted, in a position corresponding to the top plate fitting protrusion, and the lid plate includes a connecting portion to be connected to the heat dissipation plate.

According to a fourth aspect of the present invention, in the battery unit of the above second aspect or third aspect of the present invention, the top plate fitting protrusion is provided on a side edge of the top plate.

According to a fifth aspect of the present invention, in the battery unit of any one of the above first to fourth aspects of the present invention, the bottom plate fitting protrusion is provided on a side edge of the bottom plate.

According to a sixth aspect of the present invention, in the battery unit of the above fourth aspect of the present invention, a plurality of top plate fitting protrusions are provided.

According to a seventh aspect of the present invention, in the battery unit of the above fifth aspect of the present invention, a plurality of bottom plate fitting protrusions are provided.

According to an eighth aspect of the present invention, in the battery unit of any one of the above second to seventh aspects of the present invention, the top plate is formed of an insulating material achieving insulating properties of the battery assembly.

According to a ninth aspect of the present invention, in the battery unit of any one of the above first to eighth aspects of the present invention, the bottom plate is formed of an insulating material achieving insulating properties of the battery assembly.

### Explanation of Reference Signs

- 2: battery unit
- 4: battery pack
- 6: battery
- 8: storage case
- 10: case body
- 12: lid plate
- 14: bottom wall
- 16: bottom wall side fixing groove
- 32: lid plate side fixing groove
- 34: battery assembly
- 36: bottom plate
- 38: top plate
- 52: fitting protrusion
- 56: fitting protrusion

## Claims

1. A battery unit comprising a battery pack including a battery assembly formed by assembling a plurality of batteries, and a storage case storing the battery pack, wherein the storage case includes a bottom wall on which the battery pack is mounted,
the battery pack includes a bottom plate located between the battery assembly and the bottom wall when the battery pack is stored in the storage case, the bottom plate abutting on the bottom wall,
the bottom plate includes a bottom plate fitting protrusion protruding in a direction away from the battery assembly, and
the bottom wall includes a bottom wall side fixing groove in which the bottom plate fitting protrusion is fitted, in a position corresponding to the bottom plate fitting protrusion.

2. The battery unit according to claim 1, wherein the storage case includes a lid plate located at a position facing the bottom wall,
the battery pack includes a top plate covering an upper part of the battery assembly on a side opposite to the bottom plate via the battery assembly,
the top plate includes a top plate fitting protrusion protruding in a direction away from the battery assembly, and
the lid plate includes a lid plate side fixing groove in which the top plate fitting protrusion is fitted, in a position corresponding to the top plate fitting protrusion.

3. The battery unit according to claim 1, wherein the storage case includes a lid plate located at a position facing the bottom wall,
the battery pack includes a top plate covering an upper part of the battery assembly on a side opposite to the bottom plate via the battery assembly,
the top plate includes a top plate fitting protrusion protruding in a direction away from the battery assembly,
a heat dissipation plate is disposed between the top plate and the lid plate,
the heat dissipation plate includes a heat dissipation plate side fixing groove in which the top plate fitting protrusion is fitted, in a position corresponding to the top plate fitting protrusion, and
the lid plate includes a connecting portion to be connected to the heat dissipation plate.

4. The battery unit according to claim 2 or 3, wherein the top plate fitting protrusion is provided on a side edge of the top plate.

5. The battery unit according to any one of claims 1 to 4, wherein the bottom plate fitting protrusion is provided on a side edge of the bottom plate.

6. The battery unit according to claim 4, wherein a plurality of top plate fitting protrusions are provided.

7. The battery unit according to claim 5, wherein a plurality of bottom plate fitting protrusions are provided.

8. The battery unit according to any one of claims 2 to 7, wherein the top plate is formed of an insulating material achieving insulating properties of the battery assembly.

9. The battery unit according to any one of claims 1 to 8, wherein the bottom plate is formed of an insulating material achieving insulating properties of the battery assembly.
